Europäisches Patentamt

(19) European Patent Office

Office européen des brevets

(11) Numéro de publication : **0 307 269 B1**

# (12) FASCICULE DE BREVET EUROPEEN

(45) Date de publication du fascicule du brevet :
06.03.91 Bulletin 91/10

(51) Int. Cl.⁵ : **F16H 1/44**

(21) Numéro de dépôt : **88402109.8**

(22) Date de dépôt : **12.08.88**

(54) Dispositif de transmission à différentiel pour véhicule automobile.

(30) Priorité : 10.09.87 FR 8712568

(43) Date de publication de la demande :
15.03.89 Bulletin 89/11

(45) Mention de la délivrance du brevet :
06.03.91 Bulletin 91/10

(84) Etats contractants désignés :
DE GB IT

(56) Documents cités :
US-A- 2 769 353
US-A- 3 264 900
US-A- 3 362 258
US-A- 3 364 791

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Chretien, Philippe**
**81 Rue Eugène Labiche**
**F-78290 Croissy-sur-Seine (FR)**
Inventeur : **Hulin, René**
**35 Rue Charles Floquet**
**F-92500 Rueil Malmaison (FR)**

(74) Mandataire : **Moncheny, Michel et al**
**c/o Cabinet Lavoix 2 Place d'Estienne d'Orves**
**F-75441 Paris Cedex 09 (FR)**

EP 0 307 269 B1

## Description

1. La présente invention concerne les différentiels utilisés notamment dans des transmissions pour véhicule automobile.

On sait que lorsqu'un tel véhicule est équipé d'un moteur de forte puissance, des problèmes de motricité peuvent se poser, la motricité pouvant être définie comme la capacité d'adhérence au sol des roues motrices, lors d'une accélération. Ceci se traduit par un glissement c'est-à-dire par une différence de vitesse de rotation entre les roues motrices et il faut alors prévoir des moyens limitant ce glissement, pour pouvoir utiliser au mieux le potentiel de toutes les roues motrices

Parallèlement, les performances de tels véhicules justifient l'utilisation d'un dispositif qui empêche le blocage des roues lors d'un freinage, un tel dispositif désigné par l'expression ABR ayant pour effet d'améliorer la stabilité et la dirigeabilité du véhicule en phase de freinage. Or les dispositifs usuels de limitation du glissement, qui comportent des moyens de friction agissant sur des organes de transmission reliés aux roues, ont pour effet secondaire de perturber le fonctionnement des dispositifs ABR.

Deux de ces dispositifs sont décrits dans les documents US-A-3 264 900 et US-A-2 769 353.

Le premier décrit un différentiel dont l'organe d'entrée est un boîtier dans lequel sont montés coulissants deux anneaux de pression agissant sur deux embrayages, portant chacun un pignon planétaire et enserrant entre eux un axe porte-satellites. Les surfaces de ces anneaux en contact avec l'axe porte-satellites sont des rampes de sorte que sous l'effet d'un couple moteur ou de freinage les deux anneaux sont écartés l'un de l'autre et provoquent le serrage des embrayages.

Le document US-A-2 769 353 décrit un dispositif dans lequel le boîtier, constituant l'organe d'entrée, reçoit un axe porte-satellites et est en contact avec cet axe par des faces inclinées. Un couple exercé dans un sens ou dans l'autre provoque le basculement de l'axe porte-satellites d'où résulte un écartement des pignons planétaires, leur frottement sur des faces intérieures coniques du boîtier et un blocage du différentiel.

Pour tenter de résoudre le problème évoqué précédemment, on a utilisé, pour limiter le glissement, des dispositifs à frottements visqueux, par exemple du type désigné par la marque Viscodrive, ou bien encore des dispositifs à entraînement par vis sans fin (du type TORSEN). Ces solutions ne permettent cependant que l'obtention d'un compromis dont l'efficacité dépend de la sensibilité ou de la finesse d'analyse du dispositif ABR.

Une deuxième tentative de solution à ce problème a consisté à utiliser des systèmes pilotés dans lesquels les moyens de limitation du glissement du différentiel sont neutralisés en phase de freinage au moyen d'une commande hydraulique. Une telle solution, si elle est techniquement efficace, présente par contre l'inconvénient d'être coûteuse et encombrante.

L'invention se propose donc de fournir un dispositif qui soit à la fois simple et peu encombrant, et qui permette de limiter le glissement entre les roues motrices, lors d'un fonctionnement sous couple moteur, cette limitation du glissement étant cependant supprimée lors des phases de freinage.

A cet effet l'invention a pour objet un dispositif de transmission pour véhicule automobile, comprenant un mécanisme différentiel muni d'un organe d'entrée et de deux organes de sortie, montés rotatifs dans un bâti fixe autour d'un même axe, et un accouplement à friction disposé entre l'organe d'entrée et l'un des deux organes de sortie, cet accouplement à friction étant actionné en fonction du couple moteur exercé sur l'organe d'entrée, le différentiel comprenant des pignons logés dans un boîtier porte-satellites, caractérisé en ce que ce boîtier peut être rendu solidaire en rotation de l'organe d'entrée tout en pouvant subir un débattement angulaire et un débattement axial par rapport à cet organe d'entrée, respectivement autour et parallèlement à l'axe commun de l'organe d'entrée et des organes de sortie, des moyens étant prévus entre l'organe d'entrée et le boîtier pour transformer un déplacement angulaire relatif entre ces deux organes en un déplacement axial du boîtier, ledit boîtier constituant un organe d'actionnement agissant sur l'accouplement à friction, aucun effort de serrage de l'accouplement n'étant exercé par le boîtier en l'absence de couple moteur sur l'organe d'entrée

Suivant d'autres caractéristiques :

– lesdits moyens comprennent au moins une rampe inclinée par rapport à un plan perpendiculaire à l'axe et au moins un organe complémentaire en appui contre la rampe, la rampe et cet organe complémentaire étant portés respectivement par deux faces en regard de l'organe d'entrée et du boîtier ;

– il est prévu de part et d'autre de la rampe une butée, ces butées coopérant avec l'organe complémentaire pour limiter le débattement angulaire entre l'organe d'entrée et le boîtier ;

– l'organe d'entrée du différentiel comprend un boîtier extérieur dans lequel sont logés le boîtier porte-satellites dit boîtier intérieur et l'accouplement à friction ;

– le boîtier intérieur comporte deux faces d'extrémité sensiblement perpendiculaires à l'axe, disposées en regard de deux faces du boîtier extérieur, la rampe et l'organe complémentaire étant disposés d'un côté du boîtier intérieur, sur les deux faces en regard des deux boîtiers, tandis que l'autre face d'extrémité du boîtier intérieur est en appui contre le dispositif d'accouplement ;

– un ressort est interposé entre le dispositif d'accouplement et l'une des faces adjacentes du boîtier intérieur ou du boîtier extérieur ;
– le boîtier intérieur porte un axe porte-satellites s'étendant au-delà du boîtier intérieur et dont les extrémités sont reçues dans des lumières qui sont ménagées dans le boîtier extérieur et qui délimitent lesdites rampes, les lumières et l'axe porte-satellites assurant également la transmission du couple.

L'invention va être décrite plus en détails ci-dessous en se référant aux dessins annexés, donnés uniquement à titre d'exemples et sur lesquels :

– la figure 1 est une vue en coupe longitudinale d'un premier mode de réalisation d'une transmission suivant l'invention ;

– les figures 2, 3 et 4 sont trois vues en coupe partielle suivant la ligne 2-2 de la figure 1, pour trois conditions de fonctionnement différentes ;

– la figure 5 est une vue en coupe longitudinale d'un deuxième mode de réalisation ;

– les figures 6 à 8 sont trois vues en coupe suivant la ligne 6-6 de la figure 5, correspondant à trois conditions de fonctionnement du dispositif ;

– la figure 9 est une vue analogue à celle des figures 6 à 8 d'une variante ;

– la figure 10 est une vue en coupe longitudinale d'un troisième mode de réalisation ;

– les figures 11 et 12 sont deux vues en coupe suivant la ligne 11-11 de la figure 10, correspondant à deux conditions de fonctionnement différentes ;

– les figures 13 à 16 sont des schémas illustrant les avantages d'un dispositif suivant l'invention.

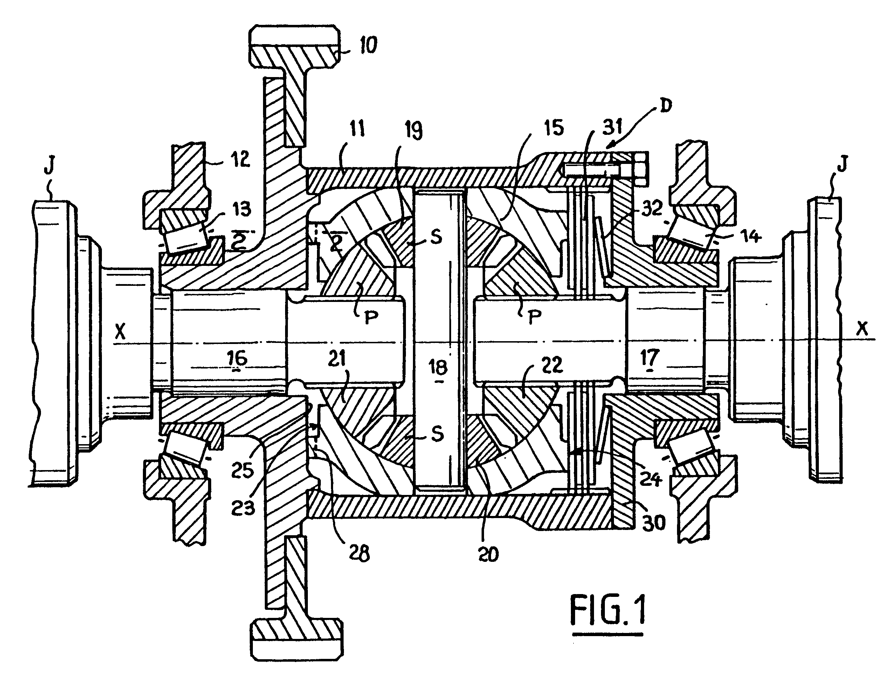

On voit sur la figure 1 une partie d'un dispositif de transmission pour véhicule automobile, située par exemple entre une boîte de vitesses, (non représentée) et deux joints homocinétiques coulissants J reliés par des arbres de transmission et par d'autres joints homocinétiques (non représentés au dessin), à des roues motrices d'un véhicule.

La partie du dispositif représentée comprend un mécanisme différentiel D du type à pignons coniques dont l'organe d'entrée est constitué par une roue dentée 10 solidaire d'un boîtier extérieur 11 monté rotatif dans un carter 12 par l'intermédiaire de deux roulements coniques 13, 14.

Dans ce boîtier extérieur est reçu un boîtier intérieur 15, qui est monté coulissant suivant la direction de 1 axe X-X commun à l'organe d'entrée 10 et aux deux organes de sortie 16, 17 du différentiel. Le boîtier intérieur est muni d'au moins un axe porte-satellites 18 sur lequel sont montés fous deux pignons satellites 19, 20 engrenant avec deux pignons planétaires 21, 22, d'axe X-X, respectivement solidaires d'un arbre de sortie 16, 17.

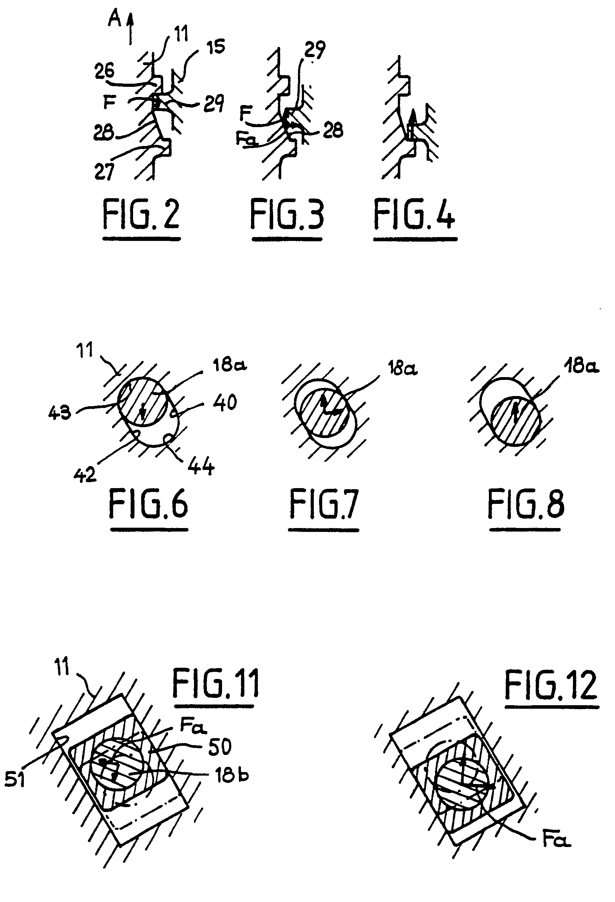

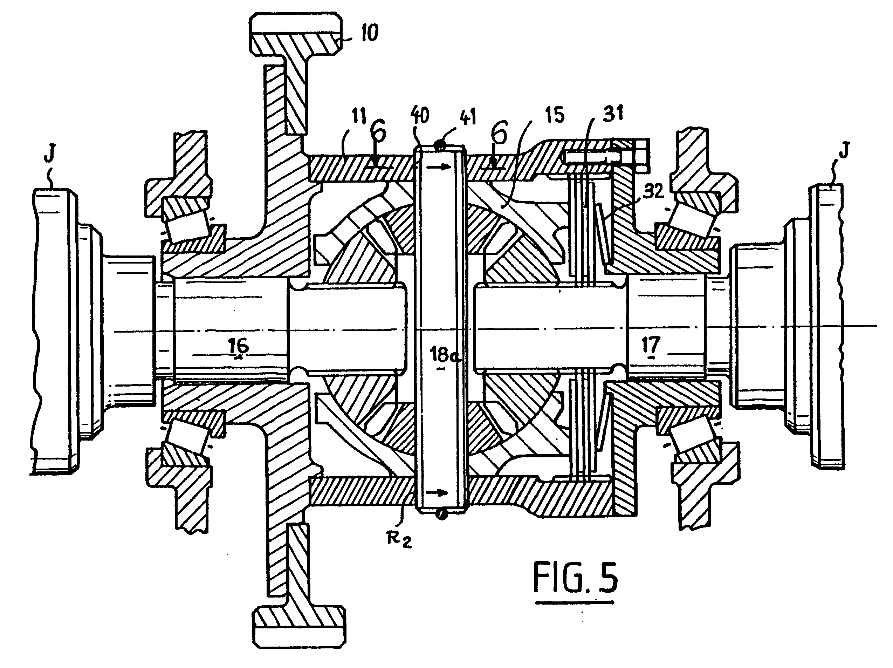

Les pignons satellites ainsi que les planétaires sont reçus dans le boîtier intérieur 15. Ce dernier comporte deux faces d'extrémité 23, 24 s'étendant à peu près perpendiculairement à l'axe X-X. Entre l'une 23 de ces faces et la surface en regard 25 du boîtier extérieur sont prévus des moyens complémentaires dont la forme est plus clairement visible sur les figures 2 à 4. Ces moyens comprennent, sur le boîtier extérieur deux butées 26, 27 séparées par un certain intervalle angulaire et entre lesquelles est ménagée une rampe 28.

Sur la face en regard du boîtier intérieur est prévue une partie en saillie ou un ergot 29 qui est adapté pour coopérer avec chacune des butées 26, 27 ainsi qu'avec la rampe intermédiaire 28.

Dans l'exemple représenté, deux jeux de moyens complémentaires 26-29 sont prévus, diamétralement opposés par rapport à l'axe X-X. Bien entendu ce nombre n'est pas limitatif, l'important étant que de tels moyens soient répartis de façon régulière autour de l'axe X-X, pour obtenir un fonctionnement équilibré.

A son extrémité opposée, le boîtier extérieur est fermé par un couvercle 30. Entre ce couvercle et la face en regard 24 du boîtier intérieur sont disposés les disques d'un accouplement à friction 31, certains de ces disques étant solidaires en rotation du boîtier extérieur tandis que les autres sont solidaires en rotation de l'arbre de sortie 17. De plus, un ressort constitué par une rondelle Belleville 32 est disposé entre le couvercle 30 et le disque adjacent de l'accouplement 31. Le disque opposé de cet accouplement est en appui contre la face adjacente 24 du boîtier intérieur.

Le fonctionnement d'un tel dispositif est le suivant :

Le sens de rotation de l'ensemble correspondant à celui de la flèche A (Fig. 2) lors d'une phase de freinage du véhicule, aucun couple moteur n'est exercé sur l'organe d'entrée 10, de sorte que l'ergot 29 du boîtier intérieur demeure en appui contre la butée 26 du boîtier extérieur, qui exerce ainsi sur le boîtier intérieur un effort de réaction représenté par la flèche F sur la figure 2. Pendant une telle phase de fonctionnement, le boîtier intérieur occupe une position extrême vers la gauche en considérant la figure 1, de sorte qu'il n'exerce aucun effort de serrage sur l'accouplement à friction 31. Le différentiel est donc parfaitement libre et ne risque pas de perturber le fonctionnement d'un éventuel dispositif anti-blocage des roues.

En fonctionnement sous couple moteur, un décalage angulaire tend à se produire entre le boîtier extérieur 11 et le boîtier intérieur 15. Si le couple moteur exercé est faible, les deux boîtiers peuvent occuper une position correspondant à la figure 3, dans laquelle l'ergot 29 se trouve en un point intermédiaire de la rampe 28. Une force axiale $F_a$ s'exerce sur le boîtier intérieur, à l'encontre de la force de la rondelle 32, serrant ainsi l'accouplement 31. Ce serrage limite le glissement entre les arbres de sortie 16, 17. L'effort de serrage sur le dispositif 31 et donc la capacité de report de couple ΔC, d'une roue à l'autre, sont proportionnels au couple moteur C et donc adaptés aux besoins.

Lors du fonctionnement sous faible couple le taux de report de couple (Δ/C/C) peut être de 100%.

Le couple moteur augmentant, l'ergot 29 vient en contact avec la butée 27 (Fig. 4), pour limiter le report de couple à une valeur ΔC max.

La rampe 28 peut être rectiligne avec une pente donnée ou avoir un profil curviligne, permettant ainsi de choisir le mode de variation du report de couple en fonction du couple moteur.

Dans le mode de réalisation de la figure 5, les éléments correspondant à ceux de la figure 1 sont désignés par les mêmes numéros de référence.

Dans cette variante, les deux extrémités de l'axe 18a portant les satellites sont reçues dans deux lumières 40 de forme oblongue, diamétralement opposées et ménagées dans le boîtier extérieur 11. L'axe 18a est maintenu par un jonc ou anneau élastique 41 centré sur l'axe X-X. L'une 42 des faces des lumières 40 correspond à la rampe 28 du mode de réalisation de la figure 1, tandis que les deux portions d'extrémité 43 et 44 de ces lumières jouent le même rôle que les butées 26 et 27 du premier mode de réalisation.

Le fonctionnement de ce mode de réalisation est voisin de celui décrit précédemment, et l'on retrouve sur les figures 6, 7 et 8 les trois positions correspondant aux trois conditions de fonctionnement des figures 2, 3 et 4, à savoir, phase de freinage (figure 6), fonctionnement sous faible couple moteur (figure 7) et fonctionnement sous couple moteur élevé (figure 8).

Comme déjà indiqué précédemment, le report de couple d'une roue à l'autre est fonction du profil de la rampe 42. Ce profil peut être soit rectiligne comme représenté aux figures 6 à 8, soit curviligne comme représenté à la figure 9, pour obtenir un report de couple variable.

Dans le mode de réalisation de la figure 10, la rondelle Belleville qui était prévue entre le boîtier extérieur et l'accouplement à friction a été supprimée.

Par contre un galet 50 ou patin à faible coefficient de frottement est interposé entre chacune des extrémités de l'axe porte-satellites 18b et la lumière correspondante 51 ménagée dans le boîtier extérieur. De plus, la dimension circonférentielle de cette lumière est suffisamment importante, par rapport au débattement autorisé pour le boîtier 15, l'axe 18b et le galet 50 pour que ce dernier ne puisse venir en butée contre les extrémités de la lumière associée. Il en résulte que la capacité de report de couple est constante sur toute la plage de couple moteur, la présence des galets 50 permettant d'accepter des couples moteurs élevés. Bien entendu, l'importance du report de couple dépend de la pente ou du profil de la rampe 51.

On a représenté aux figures 11 et 12 les deux phases de fonctionnement de ce dispositif :

– la figure 11 correspond à un fonctionnement en phase de freinage ; le couple transmis est soit nul, soit négatif (comme représenté au dessin), l'effort axial $F_a$ exercé par le boîtier extérieur 11 sur le galet 50, donc sur le boîtier 15, étant alors dans le sens qui libère les disques de friction du dispositif d'accouplement et permet ainsi au différentiel de fonctionner de façon parfaitement libre ;

– par contre, sous couple moteur (Fig. 12), l'effort axial $F_a$ est proportionnel au couple transmis, sur toute la plage de fonctionnement et, comme indiqué ci-dessus, la capacité de report de couple peut être constante et fixée à 80% par exemple.

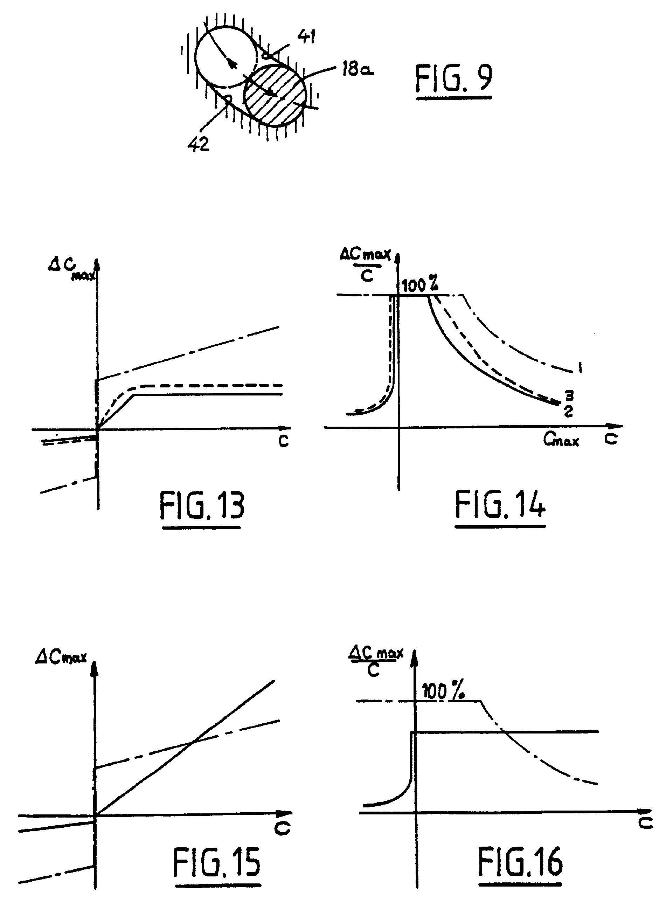

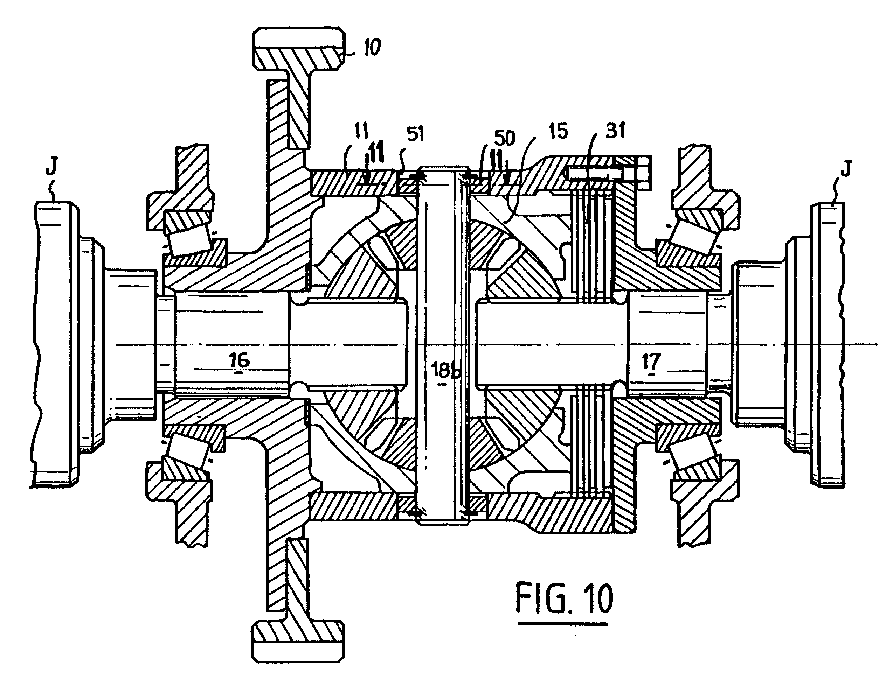

Certains avantages de l'invention, par rapport aux solutions antérieures, sont illustrés sur les schémas des figures 13 à 16.

Les schémas des figures 13 et 14 correspondent aux modes de réalisation des figures 1 et 5 tandis que ceux des figures 15 et 16 correspondent au mode de réalisation de la figure 10.

Les figures 13 et 15 représentent ΔC max. c'està-dire le report de couple maximal en fonction du couple tandis que les figures 14 à 16 représentent le taux de report ΔC max./C en fonction de ce même couple moteur.

Sur les figures 13 et 14, les courbes en trait mixte correspondent à une solution classique, les courbes en trait plein correspondent au mode de réalisation des figures 1 et 5, avec une rampe rectiligne tandis que les courbes en trait interrompu correspondent à une rampe à profil curviligne.

On constate sur ces schémas que le différentiel selon l'invention est libre dans les phases de freinage (partie des courbes située à gauche de la ligne des ordonnées), ce qui donne une excellente compatibilité avec les dispositifs anti-blocage des roues.

La partie des courbes située immédiatement à droite de l'axe des ordonnées correspond à un taux de report de couple de 100% et est donc favorable à un démarrage du véhicule dans des conditions de très faible adhérence des roues.

La troisième partie de la courbe, disposée plus à droite sur les figures 13 et 14 correspond à la limitation de C max. (figures 4 et 8). Dans ces phases de fonctionnement, le dispositif assure une motricité satisfaisante en usage sportif.

Ces deux solutions des Figs. 1 et 5 correspondent donc à un différentiel libre en phase de freinage, équivalent aux différentiels auto-bloquants sous faible couple et à un glissement limité faiblement taré pour des couples moteur élevés.

Outre leur compatibilité avec des dispositifs antiblocage de roues, ils présentent l'avantage d'optimiser la capacité de démarrage dans des conditions de faible adhérence, sans pour autant perturber le comportement du véhicule sur sol sec. Les modes de réalisation des figures 1, 5 et 9 sont donc particulièrement bien adaptés à des véhicules à traction avant, pour lesquels le démarrage sur route enneigée est habituellement difficile, mais qui acceptent difficilement des glissements limités fortement tarés, du fait des effets de couple engendrés sur le volant.

Sur les schémas des figures 15 et 16, le tracé en trait interrompu correspond à l'état antérieur de la technique tandis que le tracé en trait plein correspond à l'invention.

On constate comme dans le cas précédent un fonctionnement en différentiel libre dans des conditions de freinage et donc une bonne compatibilité avec les dispositifs ABR.

Par rapport aux modes de réalisation précédents, le taux de report de couple constant, tout en autorisant un démarrage dans des conditions de faible adhérence sous faible couple, procure un comportement sous couple moteur élevé particulièrement satisfaisant. Ce comportement dans de telles conditions est alors équivalent à celui d'un pont classique fortement taré. Cette solution est donc plus adaptée à des ponts arrière de véhicules à propulsion ou à des véhicules à quatre roues motrices à usage sportif.

En tout état de cause, les différentes variantes décrites présentent toutes par rapport à l'état antérieur de la technique l'avantage d'une grande simplicité, d'un encombrement réduit, et d'une parfaite compatibilité avec les dispositifs anti-blocage des roues.

On notera également que les engrenages du différentiel sont logés dans le boîtier intérieur, tandis que les disques de friction du dispositif d'accouplement sont disposés dans le boîtier extérieur. Il en résulte que les efforts de réaction de dentures ne transitent pas par les disques de friction, même en fonctionnement en frein moteur, ce qui permet d'obtenir le fonctionnement en différentiel libre, lors des phases de freinage.

**Revendications**

1. Dispositif de transmission pour véhicule automobile, comprenant un mécanisme différentiel (D) muni d'un organe d'entrée (10, 11) et de deux organes de sortie (16, 17), montés rotatifs dans un bâti fixe (12) autour d'un même axe (X-X), et un accouplement à friction (31) disposé entre l'organe d'entrée (10, 11) et l'un des deux organes de sortie, cet accouplement à friction étant actionné en fonction du couple moteur exercé sur l'organe d'entrée, et le différentiel (D) comprenant des pignons logés dans un boîtier porte-satellites (15), caractérisé en ce que ce boîtier (15) peut être rendu solidaire en rotation de l'organe d'entrée (10, 11) tout en pouvant subir un débattement angulaire et un débattement axial par rapport à cet organe d'entrée, respectivement autour et parallèlement à l'axe commun (X-X) de l'organe d'entrée et des organes de sortie, des moyens étant prévus entre l'organe d'entrée et le boîtier (15) pour transformer un déplacement angulaire relatif entre ces deux organes en un déplacement axial du boîtier, ledit boîtier constituant un organe d'actionnement agissant sur l'accouplement à friction, aucun effort de serrage de l'accouplement n'étant exercé par le boîtier en l'absence de couple moteur sur l'organe d'entrée (10, 11).

2. Dispositif selon la revendication 1, caractérisé en ce que lesdits moyens comprennent au moins une rampe (28 ; 42 ; 51) inclinée par rapport à un plan perpendiculaire à l'axe (X-X) et au moins un organe complémentaire (29) en appui contre la rampe, la rampe et cet organe complémentaire étant portés respectivement par deux faces en regard de l'organe d'entrée (10, 11) et du boîtier (15).

3. Dispositif selon la revendication 2, caractérisé en ce qu'il est prévu de part et d'autre de la rampe (28) une butée (26, 27), ces butées (26, 27) coopérant avec l'organe complémentaire (29) pour limiter le débattement angulaire entre l'organe d'entrée (10, 11) et le boîtier (15).

4. Dispositif selon l'une quelconque des revendications 1 à 3, caractérisé en ce que l'organe d'entrée du différentiel comprend un boîtier extérieur (11) dans lequel sont logés le boîtier porte-satellites (15) dit boîtier intérieur et l'accouplement à friction.

5. Dispositif selon les revendications 2 et 4, caractérisé en ce que le boîtier intérieur (15) comporte deux faces d'extrémité (23, 24) sensiblement perpendiculaires à l'axe (X-X), disposées en regard de deux faces (25, 30) du boîtier extérieur, la rampe (28) et l'organe complémentaire (29) étant disposés d'un côté du boîtier intérieur, sur les deux faces en regard (23, 25) des deux boîtiers (11, 15), tandis que l'autre face d'extrémité (24) du boîtier intérieur est en appui contre le dispositif d'accouplement (31).

6. Dispositif selon la revendication 5, caractérisé en ce qu'un ressort (32) est interposé entre le dispositif d'accouplement et l'une des faces adjacentes (24, 30) du boîtier intérieur ou du boîtier extérieur.

7. Dispositif selon la revendication 5, caractérisé en ce que le boîtier intérieur (15) porte un axe porte-satellites (18a, 18b) s'étendant au-delà du boîtier intérieur et dont les extrémités sont reçues dans des lumières (40, 51) qui sont ménagées dans le boîtier extérieur et qui délimitent lesdites rampes, les lumières et l'axe porte-satellites assurant également la transmission du couple.

8. Dispositif selon la revendication 7, caractérisé en ce que l'axe porte-satellites (18a) peut venir en butée contre le fond (43, 44) des lumières (40).

9. Dispositif selon la revendication 7, caractérisé en ce que des galets (50) sont interposés entre l'axe porte-satellites (18b) et les lumières (51).

10. Dispositif selon la revendication 9, caractérisé en ce que le débattement axial du boîtier intérieur (15) est inférieur au débattement axial de l'axe porte-satellites (18b) dans les lumières (51) du boîtier extérieur.

11. Dispositif selon l'une quelconque des revendications 2 à 10, caractérisé en ce que les rampes (28 ; 42 ; 51) sont rectilignes.

12. Dispositif selon l'une quelconque des revendications 2 à 10, caractérisé en ce que les rampes (28 ; 42 ; 51) ont un profil curviligne.

13. Dispositif selon l'une quelconque des revendications 1 à 12, caractérisé en ce que les organes de sortie du différentiel sont deux arbres (16, 17) reliés chacun à un joint homocinétique coulissant (J) pouvant absorber leurs débattements axiaux.

14. Dispositif selon l'une quelconque des revendications 1 à 13, caractérisé en ce qu'il est combiné à un dispositif destiné à empêcher le blocage des roues du véhicule.

## Ansprüche

1. Getriebevorrichtung für Kraftfahrzeuge, mit einem Differentialmechanismus (D), welcher mit einem Eingangselement (10, 11) und zwei Ausgangselementen (16, 17) versehen ist, die um die gleiche Achse (X-X) drehbar in einem feststehenden Gestell (12) angebracht sind, und einer Reibungskupplung (31), die zwischen dem Eingangselement (10, 11) und den beiden Ausgangselementen angeordnet ist, wobei diese Reibungskupplung in Abhängigkeit von dem auf das Eingangselement ausgeübten Antriebsmoment in Tätigkeit gesetzt wird und das Differential (D) Zahnräder aufweist, die in einem Satellitenträgergehäuse (15) aufgenommen sind, dadurch gekennzeichnet, daß dieses Gehäuse (15) drehfest mit dem Eingangselement (10, 11) gemacht werden kann, dabei aber eine Winkelverlagerung und eine Axialverlagerung in Bezug auf dieses Eingangselement um die bzw. parallel zu der gemeinsamen Achse (X-X) des Eingangselements und der Ausgangselemente durchmachen kann, wobei zwischen dem Eingangselement und dem Gehäuse (15) Mittel zum Umwandeln einer Winkelrelativversetzung zwischen diesen beiden Elementen in eine Axialversetzung des Gehäuses vorgesehen sind, wobei das Gehäuse ein auf die Reibungskupplung wirkendes Betätigungselement bildet und bei Fehlen eines Antriebsmoments auf das Eingangselement (10, 11) keine Anpreßkraft durch das Gehäuse auf die Kupplung ausgeübt wird.

2. Vorrichtung nach Anspruch 1, dadurch gekennzeichnet, daß die Mittel mindestens eine bezüglich einer zur Achse (X-X) senkrechten Ebene geneigte Rampe (28 ; 42 ; 51) und mindestens ein gegen die Rampe anliegendes komplementäres Element (29) umfassen, wobei die Rampe und dieses komplementäre Element auf zwei einander zugekehrten Seiten des Eingangselements (10, 11) bzw. des Gehäuses (15) sitzen.

3. Vorrichtung nach Anspruch 2, dadurch gekennzeichnet, daß zu beiden Seiten der Rampe (28) ein Anschlag (26, 27) vorgesehen ist, wobei diese Anschläge (26, 27) mit dem komplementären Element (29) die Winkelverlagerung zwischen dem Eingangselement (10, 11) und dem Gehäuse (15) beschränkend zusammenwirken.

4. Vorrichtung nach irgendeinem der Ansprüche 1 bis 3, dadurch gekennzeichnet, daß das Eingangselement des Differentials ein äußeres Gehäuse (11) umfaßt, in welchem das inneres Gehäuse genannte Satellitenträgergehäuse (15) und die Reibungskupplung aufgenommen sind.

5. Vorrichtung nach den Ansprüchen 2 und 4, dadurch gekennzeichnet, daß das innere Gehäuse (15) zwei zur Achse (X-X) im wesentlichen senkrechte Endflächen (23, 24) aufweist, die zwei Flächen (25, 30) des äußeren Gehäuses gegenüberstehend angeordnet sind, wobei die Rampe (28) und das komplementäre Element (29) auf der einen Seite des inneren Gehäuses auf den beiden einander gegenüberstehenden Flächen (23, 25) der beiden Gehäuse (11, 15) angeordnet sind, während die andere Endfläche (24) des inneren Gehäuses gegen die Kupplungsvorrichtung (31) anliegt.

6. Vorrichtung nach Anspruch 5, dadurch gekennzeichnet, daß eine Feder (32) zwischen die Kupplungsvorrichtung und die eine der benachbarten Flächen (24, 30) des inneren Gehäuses oder des äußeren Gehäuses zwischengesetzt ist.

7. Vorrichtung nach Anspruch 5, dadurch gekennzeichnet, daß das innere Gehäuse (15) eine Satellitenträgerachse (18a, 18b) trägt, welche sich über das innere Gehäuse hinaus erstreckt und deren Enden in im äußeren Gehäuse ausgebildeten Langlöchern (40, 51) aufgenommen sind, wobei die Langlöcher und die Satellitenträgerachse ebenfalls die Übertragung des Moments gewährleisten.

8. Vorrichtung nach Anspruch 7, dadurch gekennzeichnet, daß die Satellitenträgerachse (18a) gegen den Boden (43, 44) der Langlöcher (40) zur Anlagen kommen kann.

9. Vorrichtung nach Anspruch 7, dadurch gekennzeichnet, daß Steine (50) zwischen die Satellitenträgerachse (18b) und die Langlöcher (51) zwischengefügt sind.

10. Vorrichtung nach Anspruch 9, dadurch gekennzeichnet, daß die Axialverlagerung des inneren Gehäuses (15) unter der Axialverlagerung der Satellitenträgerachse (18b) in den Langlöchern (51) des äußeren Gehäuses liegt.

11. Vorrichtung nach irgendeinem der Ansprüche 2 bis 10, dadurch gekennzeichnet, daß die Rampen (28 ; 42 ; 51) geradlinig sind.

12. Vorrichtung nach irgendeinem der Ansprüche 2 bis 10, dadurch gekennzeichnet, daß die Rampen (28 ; 42 ; 51) ein gekrümmtes profil haben.

13. Vorrichtung nach irgendeinem der Ansprüche 1 bis 12, dadurch gekennzeichnet, daß die Ausgangselemente des Differentials zwei Wellen (16, 17) sind, welche jeweils mit einem homokinetischen Gleitgelenk (J) verbunden sind, welches deren Axialverlagerungen aufnehmen kann.

14. Vorrichtung nach irgendeinem der Ansprüche 1 bis 13, dadurch gekennzeichnet, daß sie mit einer Vorrichtung zur Verhinderung eines Blockierens der Räder des Fahrzeugs kombiniert ist.

**Claims**

1. Transmission device for an automobile vehicle, comprising a differential mechanism (D) fitted with an input device (10, 11) and two output devices (16, 17) mounted in a fixed frame (12) and designed to rotate about the same axis (X-X), together with a friction coupling (31) arranged between the input device (10, 11) and one of the two output devices, this friction coupling being operated in accordance with the engine torque exerted on the input device and the differential (D), this comprising gears located in a satellite gear carrier housing (15), characterised in that this housing (15) may rotate integral with the input device (10, 11) while being subjected to an angular displacement and an axial displacement relative to the said input device, respectively about and parallel to the common axis (X-X) for the input device and the output devices, a means being provided between the input device and the housing (15) to convert a relative angular displacement between these two devices into an axial displacement of the housing, the said housing comprising an actuating device acting on the friction coupling, no tightening force for the coupling being exerted by the housing on the input device (10, 11) in the absence of an engine torque.

2. Device in accordance with claim 1, characterised in that the said means comprises at least one plane (28, 42, 51) inclined relative to a plane perpendicular to the axis (X-X) and at least one supplementary device (29) in contact with the inclined plane, this inclined plane and the said supplementary device respectively forming part of the two faces opposite the input device (10, 11) and the housing (15).

3. Device in accordance with claim 2, characterised in that a stop (26, 27) is provided on each side of the inclined plane (28), these stops (26, 27) cooperating with the supplementary device (29) in order to limit the angular displacement between the input device (10, 11) and the housing (15).

4. Device in accordance with any one of claims 1 to 3, characterised in that the input device for the differential comprises an outer housing (11), this locating the housing for the satellite gear carrier (15), known as the inner housing, together with the friction coupling.

5. Device in accordance with claims 2 and 4, characterised in that the inner housing (15) includes to end faces (23, 24) basically perpendicular to the axis (X-X) and located opposite the two faces (25, 30) for the outer housing, the inclined plane (28) and the supplementary device (29) being located on one side of the inner housing, on the two faces (23, 25) opposite the two housings (11, 15), the end face (24) of the inner housing then being in contact with the coupling device (31).

6. Device in accordance with claim 5, characterised in that a spring (32) is positioned between the coupling device and one of the adjacent faces (24, 30) of the inner housing or the outer housing.

7. Device in accordance with claim 5, characterised in that the inner housing (15) carries the satellite gear carrier shaft (18a, 18b) extending beyond the inner housing, the ends being held in apertures (40, 51) which are provided in the outer housing and which define the limits of the said inclined planes, the said apertures and the shaft of the satellite gear carrier equally ensuring that the torque is transmitted.

8. Device in accordance with claim 7, characterised in that the shaft of the satellite gear carrier (18a) may contact the bottom (43, 44) of the apertures (40).

9. Device in accordance with claim 7, characterised in that bearings (50) are positioned between the shaft of the satellite gear carrier (18b) and the apertures (51)

10. Device in accordance with claim 9, characterised in that the axial displacement of the inner housing (15) is less than the axial displacement of the satellite gear carrier shalt (18b) in the apertures (51) of the outer housing.

11. Device in accordance with any one of claims 2 to 10, characterised in that the inclined planes (28, 42, 51) are rectilinear

12. Device in accordance with any one of claims 2 to 10, characterised in that the inclined planes (28, 42, 51) have a curvilinear profile.

13. Device in accordance with any one of claims 1 to 12, characterised in that the output devices for the differential are in the form of two shafts (16, 17) each being connected to a sliding Hooke's joint (J) which is capable of absorbing the said axial displacements.

14. Device in accordance with any one of claims 1 to 13, characterised in that it is combined with a device designed to prevent locking of vehicle wheels.

FIG.1

A

26
11
15

F

28
29

27

## FIG.2

29

F

Fa

28

## FIG.3

## FIG.4

11
18a

43
40

42
44

## FIG.6

18a

## FIG.7

18a

## FIG.8

11

## FIG.11

Fa
50
18b

51

## FIG.12

Fa

FIG.5

FIG. 9

FIG.13

FIG.14

FIG.15

FIG.16

FIG. 10

EP 0 307 269 B1